# EUROPEAN PATENT APPLICATION

(11) **EP 4 546 744 A1**
(43) Date of publication of application: **30.04.2025**
(21) Application number: 23205309.0
(22) Date of filing: 23.10.2023
(51) Int. Cl.: H04L 43/0852, H04L 43/026, H04L 43/087, H04L 43/12, H04L 43/16, H04L 47/2441

(54) **MONITORING MODULE, SYSTEM, COMPUTER-IMPLEMENTED METHOD, AND COMPUTER PROGRAM PRODUCT FOR MONITORING DATA STREAMS**

(71) Applicant: Siemens Aktiengesellschaft, 80333 München (DE)
(72) Inventor: Blenk, Andreas, 86916 Kaufering (DE); Bruhse, Michael, 85551 Kirchheim (DE)
(74) Representative: Siemens Patent Attorneys

(57) **Abstract**

A monitoring module for monitoring data streams transferred between a plurality of remote controllable entities and a plurality of control units for remote control of the remote controllable entities is proposed, including:
a determining unit for determining, for a plurality of received data packets of a certain data stream, an inter-arrival time of two respective consecutive data packets of the certain data stream,
a first classifying unit for classifying the respective determined inter-arrival time to one cycle time class of a plurality N of defined cycle time classes and for providing an inter-arrival time count for each of the cycle time classes, with N ≥ 2,
a calculating unit for calculating probabilities for N cycle time classes based on the provided inter-arrival time counts, and
a second classifying unit for classifying the certain data stream as a data stream of that cycle time class of the N cycle time classes whose determined probability is higher than a certain target probability.

## Description

The present invention relates to a monitoring module for monitoring data streams, in particular real-time data streams, transferred between a plurality of remote controllable entities and a plurality of control units for remote control of the remote controllable entities, the remote controllable entities being coupled with the control units by a communication network, for example an IT network.

The remote controllable entities may be part of an OT network and the control units may be part of a hyper-converged infrastructure (HCI) being coupled or being part of the IT network.

Furthermore, the present invention relates to a system including such a monitoring module, to a computer-implemented method for monitoring data streams, and to a computer program product for monitoring data streams.

Industrial network environments are becoming more flexible and dynamic. As a result, more IT-technology, which has shown to provide capabilities for highly flexible demands, is used in industrial network communication scenarios. To further increase flexibility, programmable logic controllers (PLCs) are getting softwarized. Such PLCs are called virtual programmable logic controllers (vPLCs). vPLCs can be hosted on common of the shelve equipment (COTS) servers in datacenters. At the same time, equipment and machines, as examples for remote controllable entities, will remain in production cells.

In the past, PLCs were co-located with the production machines within the production cells. In contrast to this setup, remote controllable entities, like machines, can now also connect to vPLCs running on virtualized servers. It is envisioned that the network infrastructure between the cells and the datacenters can be based on IT equipment managed by IT administrations. The end-to-end connection between OT equipment (machines and vPLCs) is then established over both IT (servers and IT networking hardware such as switches and routers) and OT network equipment (e.g., PROFINET switches within cells).

This, however, introduces new demands on monitoring and validation whether the real-time data streams are correctly transmitted within the system. But the existing mechanisms and concepts rely on techniques that demand additional infrastructure installation and setups. For instance, in case of PROFINET networks, traffic is mirrored on switches or via additional test access points (TAPs) and transmitted to a server system. This demands additional cabling and infrastructure setups. Furthermore, current techniques require configuration and maintenance of the dedicated platform hosting the monitoring system. Moreover, traffic arriving at a server system hosting vPLCs might not be mirrored anymore due to cabling and cost overhead.

Thus, it is one object of the present invention to enhance the monitoring of data streams transferred between a plurality of remote controllable entities and a plurality of remote control units.

According to a first aspect, a monitoring module for monitoring data streams, in particular real-time data streams, transferred between a plurality of remote controllable entities and a plurality of control units for remote control of the remote controllable entities is proposed, the remote controllable entities being coupled with the control units by a communication network. The monitoring module includes:
a determining unit for determining, for a plurality of received data packets of a certain data stream, an inter-arrival time of two respective consecutive data packets of the certain data stream,
a first classifying unit for classifying the respective determined inter-arrival time to one cycle time class of a plurality N of defined cycle time classes and for providing an inter-arrival time count for each of the cycle time classes, with N ≥ 2,
a calculating unit for calculating probabilities for N cycle time classes based on the provided inter-arrival time counts, and
a second classifying unit for classifying the certain data stream as a data stream of that cycle time class of the N cycle time classes whose determined probability is higher than a certain target probability.

In particular, the control units for remote control are embodied as programmable logic controllers, for example as virtual programmable logical controllers. For example, remote controllable entities are embodied as machines and equipment in an OT network. In the following, the term "cycle time class" may be also referred to as "class". Further, data streams may be also referred to as streams, data flows or flows.

The group of the determining unit, the first classifying unit, the calculating unit, and the second classifying unit may be integrated in an allocation unit being configured to allocate a data stream transferred between a remote controllable unit and a control unit to a certain cycle time class. In other words, the allocation unit is configured to learn to which cycle time class a certain data stream belongs to. If a certain data stream is learned, said learned data stream can be monitored advantageously. Thus, the monitoring module is adapted to detect real-time data flows in-network, i.e., to detect e.g., PROFINET traffic flows/streams and to classify them into their corresponding real-time class, i.e., their corresponding cycle time class, e.g., class 1 ms or class 3 ms. In a further step, the monitoring module may inform a user or operator about the classified data streams and potential alerts.

Additionally to the allocation unit, the monitoring module may comprise a selection unit, an operation unit and signaling unit. Therefore, the monitoring module may be adapted to detect the data streams, e.g., using a mac source and destination addresses or other header fields of the data packets of the data stream, to classify them into their corresponding cycle time class with high confidence and then to send alerts or signals to inform the operator about current flows and their performance.

As the monitoring module may be embodied in-network, no additional cabling and maintenance for hardware or software is needed advantageously. The monitoring module can run for example on Linux-based platforms, which already host the control units, exemplarily being embodied as virtual programmable logic controllers (vPLC). Therefore, no additional configuration and maintenance overhead is needed. Further, the monitoring module provides in-real-time classification and alerting and there is no additional delay coming from an external system introducing additional networking delay. Further, the monitoring module provides flexible deployment closed to source or sinks enabling improved root-cause analyses.

According to an embodiment, the first classifying unit is configured to classify the respective determined inter-arrival time to one of the N cycle time classes using a soft boundary mechanism.

According to a further embodiment, the soft boundary mechanism uses, for each of the N cycle time classes, defined boundaries being defined by a certain value range for the inter-arrival time being allocated to the respective cycle time class.

According to a further embodiment, the respective certain value range is defined by a certain value allocated to the respective cycle time class and a certain allowed deviation in percent.

As data streams might show jitter and/or delays, the soft boundary mechanism may be used for classifying said cycle time classes advantageously. To classify said data streams, the plurality N of defined or pre-defined cycle time classes may be used, wherein said N pre-defined cycle time classes provide a default configuration. For instance, the PROFINET classes may be used for the N cycle time classes. On the other hand, the monitoring module may be adapted to learn new classes and/or the operator may have the ability to define new classes for the monitoring module. Thus, the default configuration may be adaptable according to user requirements, i.e., additional configuration possibilities may be provided if the user has such demand. As mentioned, to classify the data streams into classes and to take acceptable jitter into account, the soft boundary mechanism is used. In particular, for each class, a soft boundary allowing a certain deviation in percent, for example 5 percent, is set up in the default configuration. That is, each inter-arrival time of a data stream belong to one class may deviate up to 10 percent in total (or 5 percent from the mean value up and down). In embodiments, the soft boundary may be configured by the user, e.g. an OT operator.

As data packets of data streams might end-up in different classes during the classification, an in-band majority vote mechanism is used based on the above mentioned certain target probability. For example, the target probability is 80 percent. That is, the probability to appear and to be classified into one class of said cycle time classes needs to be above the certain target probability. The target probability may be a pre-defined threshold being defined in the default configuration of the monitoring module. In addition, a certain minimum number of classified inter-arrival times may be a requirement to start the classification. In other words, the second classifying unit may be only active if the number of inter-arrival times classified by the first classifying unit is higher than said certain minimum number. On the other hand, only a maximum number of inter-arrival times (as a limit) may be allowed before a data stream is marked as unclassifiable. In any case, the signaling unit of the monitoring module may send alerts to the user, e.g. an OP operator.

According to a further embodiment, the second classifying unit is configured to set the defined boundaries of a classified data stream as learned boundaries for the classified data stream for an operation phase.

According to a further embodiment, the first classifying unit is configured to increment the inter-arrival time count of a certain cycle time class if the determined inter-arrival time matches the certain value range allocated to said certain cycle time class.

According to a further embodiment, the second classifying unit is only active if the number of inter-arrival times classified by the first classifying unit is higher than a certain minimum number.

According to a further embodiment, the calculating unit is configured to calculate, for the respective cycle time class, a respective probability by dividing the number of inter-arrival time counts of the respective cycle time class by the total number of classified inter-arrival times of all N cycle time classes.

Further, the first classifying unit is particularly configured to assign a certain determined inter-arrival time to a no-match cycle time class, if the determined inter-arrival time does not match any of the certain value ranges of the N cycle time classes.

According to a further embodiment, the monitoring module comprises an alerting unit which is configured to generate a certain alert based on the classified certain data stream.

According to a further embodiment, the second classifying unit is configured to mark the certain data stream as not classifiable if the total number of classified inter-arrival times is higher than a defined limit and none of the determined probabilities is higher than the certain target probability. In this regard, the alerting unit is particularly configured to generate an alert if the certain data stream is marked as not classifiable.

According to a further embodiment, the monitoring module includes a selection unit which is configured
- to determine a stream key of a received data packet of a certain data stream,
- to check if the certain data stream is known to the monitoring module by a mapping the determined stream key to a memory, in particular to a hash map,
- if the certain data stream is known to the monitoring module and the certain data stream is marked as not classifiable, to ignore data packets of the certain data stream,
- if the certain data stream is known to the monitoring module and the certain data stream is classified by the second classifying unit, to create a new stream key for the certain data stream and to add the created stream key to the memory, and/or
- to count the number of received data packets for every data stream a stream key is stored in the memory.

If the data stream is not known, an entry is created. After this, it is known. In particular, the selection unit works per data stream.

According to a further embodiment, the monitoring module includes an allocation module. The allocation module may integrate the determining unit, the first classifying unit, the calculating unit, the second classifying unit and the alerting unit.

According to a further embodiment, the monitoring module includes an operation unit which is configured to execute during the operation phase:
- checking if learned boundaries are available for received data packets of a certain data stream,
- checking if arriving data packets of the certain data stream lie in the learned boundaries of the certain data stream, and/or
- creating an alert if an error is detected, said alert specifying which data stream is incorrect and the number of errors counted for the incorrect data stream.

In the following, a detailed example for the functionality of the monitoring module including the selection unit, the allocation unit, the operation unit and the signaling unit is given. In this regard, below table 1 shows all configurable parameters, their naming in pseudo code, their value ranges, and their default values.

In this example, the selection unit executes algorithm 1 (see also pseudo code of algorithm 1), the allocation unit executes algorithm 2 (see also pseudo code of algorithm 2), and the operation unit executes algorithm 3 (see also pseudo code of algorithm 3).

**Table 1**

| Parameter | Naming | Value range | Default |
|---|---|---|---|
| Soft-boundaries | soft-bounds | +-(0% < x < 50%)* cycle time class | +-5% * cycle time class |
| Predefined boundaries | pre-bounds | +-(0% < x < 50%) * cycle time class | +-5% * cycle time class |
| Target probability | target | 50% < x <= 100% | 80% |
| Minimum number of classified iats | minimum | N₊ | 10 |
| iat limit of classification | limit | N₊ | 150 |

### Algorithm 1 (see below pseudo code of algorithm 1):

- Determines the stream key of the received packet (line 2 of pseudo code).
- Checks if the stream is already known by looking into a hash map where all detected streams are stored. If a stream is known, the algorithm determines the current phase of the stream (lines 3-11). There are two phases: allocating (or learning) and operation. The learning phase is described by algorithm 2 and its pseudo code. The operation phase is described by algorithm 3 and its pseudo code. If the classification for a stream was not successful or has actively been stopped, indicated by the classification into class 0, packets of the stream are ignored (lines 6 and 7).
- Else creates new stream, adds to hash map, and creates an alert (lines 13-16). This is executed for the first packet of a data stream. Then, lines 4 to 11 are used.
- Counts number of received packets (lines 5 and 14). The counter is needed to check later if the classification limit is reached during the learning phase. If the limit is reached, the classification is stopped. This is done to prohibit an infinity learning loop. It further provides the user with more insights and notifications, e.g., that this stream requires additional user investigation.

### Algorithm 2 (see below pseudo code of algorithm 2):

- Use the ***soft boundary*** to classify the packet inter-arrival time (iat = inter-arrival time) (lines 2-4).
- If the minimum number of classified inter-arrival times ***min***_***num*** for a stream is reached, tries to find the class with a large enough quantity to reach the required classification target probability ***target*** (lines 5-9). The minimum number is introduced to guarantee a base confidence in the collected data and therefore in the classification.

- If the target probability is reached, the stream is classified, the stream boundaries **pre**_***bounds*** are set, and an alert is created (lines 9-14). The defined target probability is larger than 50% (configurable).
- If the limit of inter-arrival times given for classification ***limit*** is reached, the stream is marked as not classifiable, and an alert is created (lines 15-18). In this case, it is the intention that a user needs to check a potentially corrupt stream.

### Algorithm 3 (see below pseudo code of algorithm 3):

- Checks if stream cycle time boundaries are learned (line 2) .
- Checks if arriving packets lie in allowed boundaries (line 3) .
- Creates an alert if an error is detected (lines 5 and 6). This alert specifies which stream is incorrect and the number of errors counted for this stream.

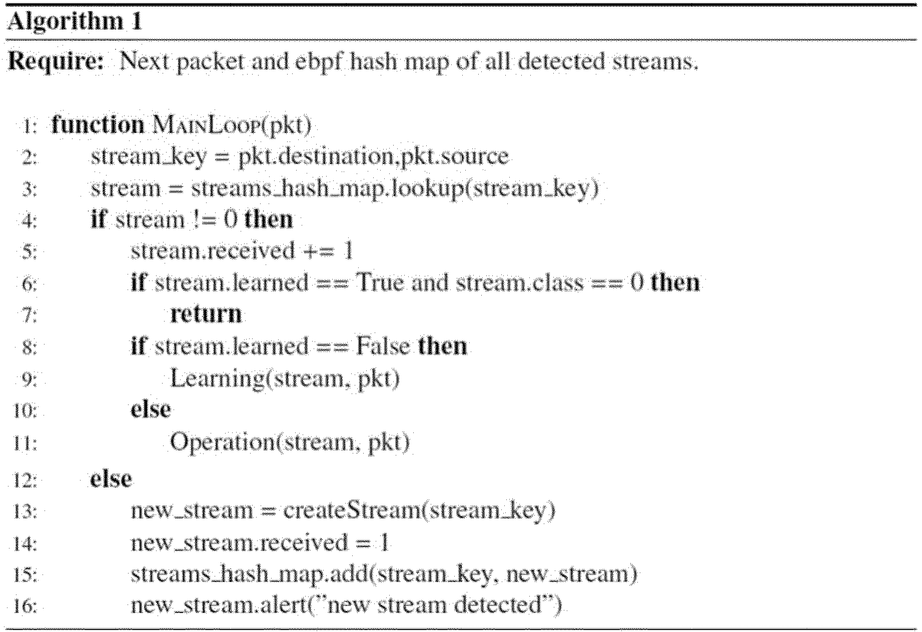

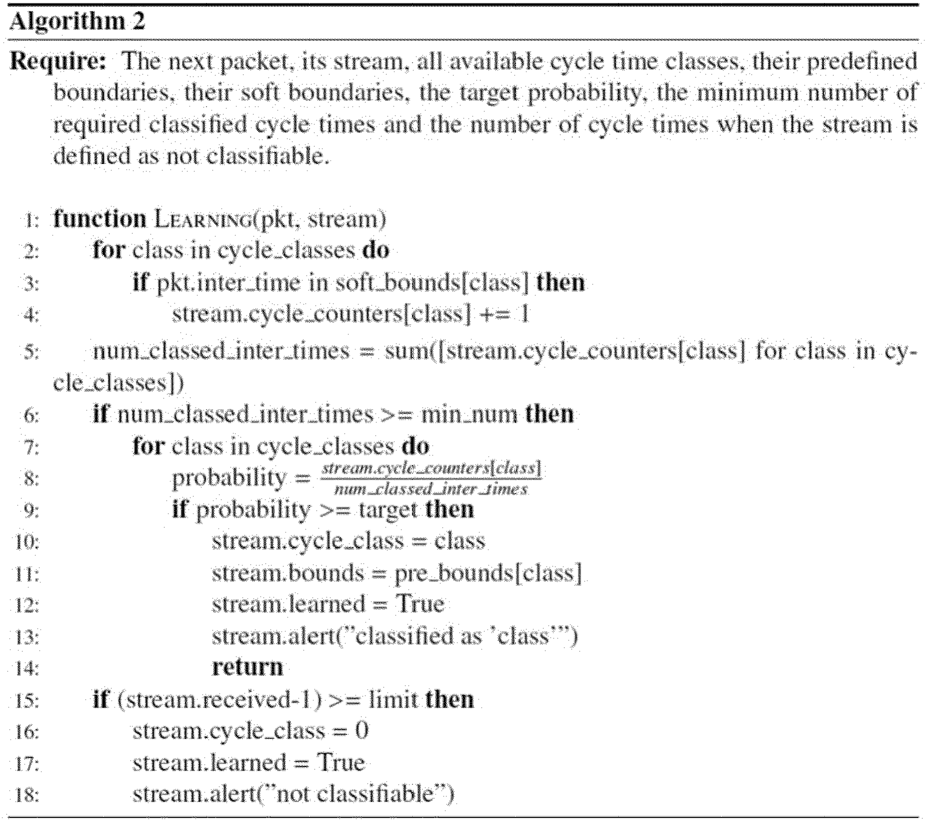

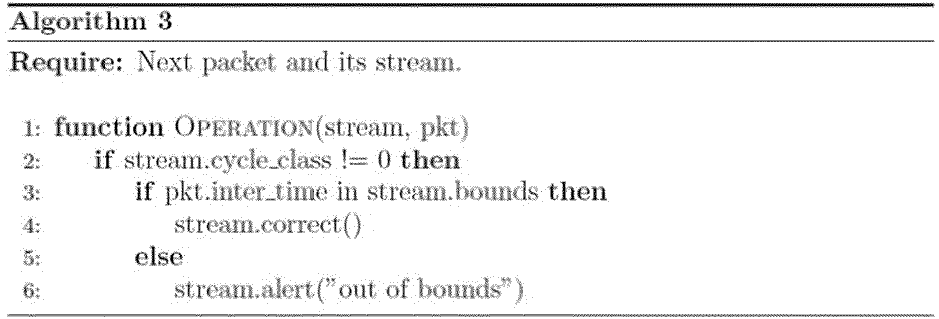

The respective unit, e.g., the calculating unit, may be implemented in hardware and/or in software. If said unit is implemented in hardware, it may be embodied as a device, e.g., as a computer or as a processor or as a part of a system, e.g., a computer system. If said unit is implemented in software it may be embodied as a computer program product, as a function, as a routine, as a program code or as an executable object.

Any embodiment of the first aspect may be combined with any embodiment of the first aspect to obtain another embodiment of the first aspect.

According to a second aspect, a system is proposed, the system comprising:
an OT network (operational technology network) including a plurality of remote controllable entities,
a plurality of control units for remote control of the remote controllable entities,
a communication network for coupling the remote controllable entities with the control units, and
a monitoring module for monitoring data streams of the first aspect or of any embodiment of the first aspect.

In particular, the control units are embodied as programmable logic controllers, for example as virtual programmable logical controllers.

In embodiments, the monitoring module is embodied an in-network module being integrated in a hyper-converged infrastructure being coupled or being part of the communication network.

According to a third aspect, a computer-implemented method for monitoring data streams, in particular real-time data streams, transferred between a plurality of remote controllable entities and a plurality of control units for remote control of the remote controllable entities, the remote controllable entities being coupled with the control units by a communication network, is proposed. The method comprises:
determining, for a plurality of received data packets of a certain data stream, an inter-arrival time of two respective consecutive data packets of the certain data stream,
classifying the respective determined inter-arrival time to one cycle time class of a plurality N of defined cycle time classes and providing an inter-arrival time count for each of the cycle time classes,
calculating probabilities for N cycle time classes based on the provided inter-arrival time counts, and
classifying the certain data stream as a data stream of that cycle time class of the N cycle time classes whose determined probability is higher than a certain target probability.

In particular, a computer-implemented method is a method which utilizes a computer, a computer network, or another programmable device, wherein one or multiple features are wholly or partially realized by means of a computer program.

The technical effects and advantages described for the monitoring module according to the first aspect apply equally to the computer-implemented method according to the third aspect.

According to a fourth aspect, a computer program product comprising a program code for executing the computer-implemented method according to the third aspect when run on at least one computer is proposed.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention. Independent of the grammatical term usage, individuals with male, female or other gender identities are included within the term.

Further embodiments, features and advantages of the present invention will become apparent from the subsequent description and dependent claims, taken in conjunction with the accompanying drawings, in which:
- Fig. 1: shows a schematic block diagram of a first embodiment of a system including a monitoring module for monitoring data streams;
- Fig. 2: shows a further representation of the system of Fig. 1 illustrating details of the monitoring module for monitoring data streams;
- Fig. 3: shows a first example of inter-arrival time classification provided by the monitoring module;
- Fig. 4: shows a second example of inter-arrival time classification provided by the monitoring module;
- Fig. 5: a diagram illustrating a first example for interarrival time counts per cycle time classes;
- Fig. 6: a diagram illustrating a second example for interarrival time counts per cycle time classes;
- Fig. 7: shows a schematic block diagram of a second embodiment of a system including a monitoring module for monitoring data streams;
- Fig. 8: shows a schematic block diagram of a third embodiment of a system including a monitoring module for monitoring data streams; and
- Fig. 9: shows a schematic flow chart of an embodiment of a computer-implemented method for monitoring data streams.

In the Figures, like reference numerals designate like or functionally equivalent elements, unless otherwise indicated.

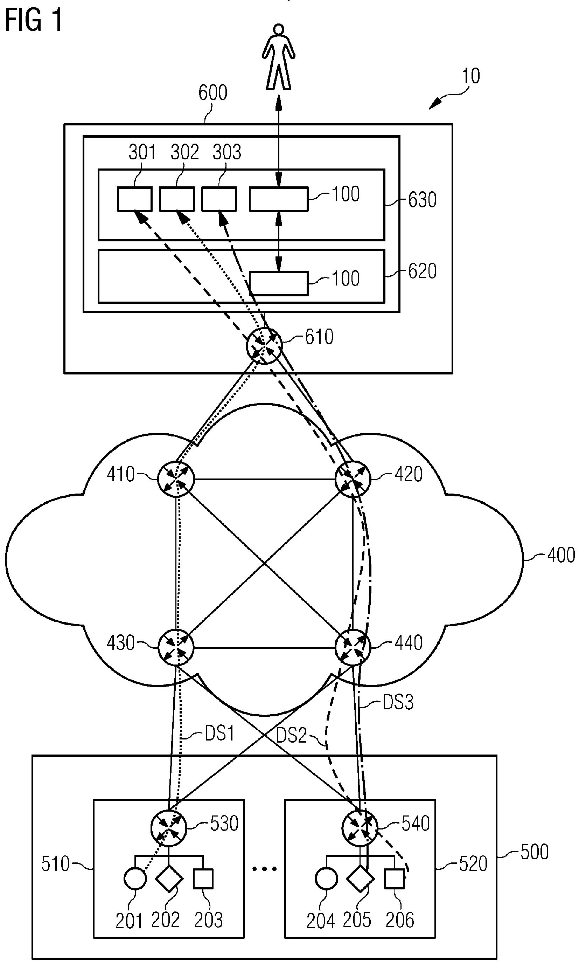

In Fig. 1, a schematic block diagram of a first embodiment of a system 10 including a monitoring module 100 for monitoring data streams is depicted.

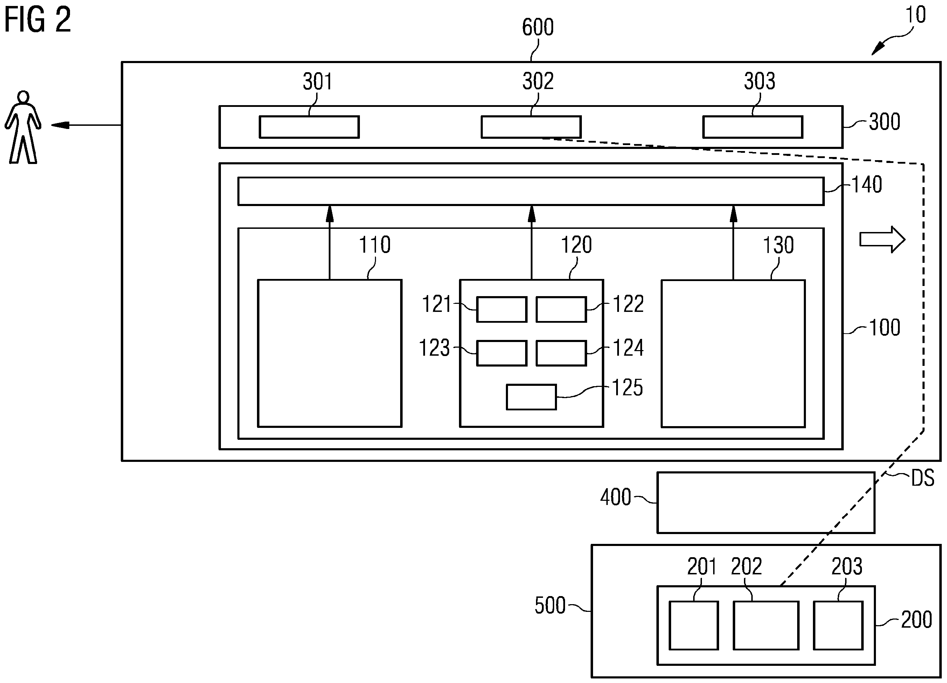

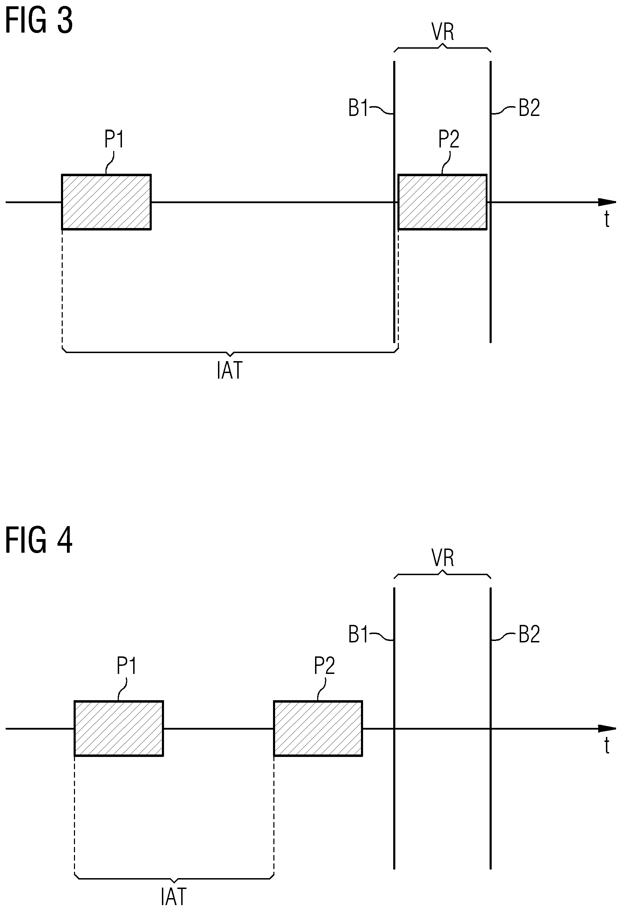

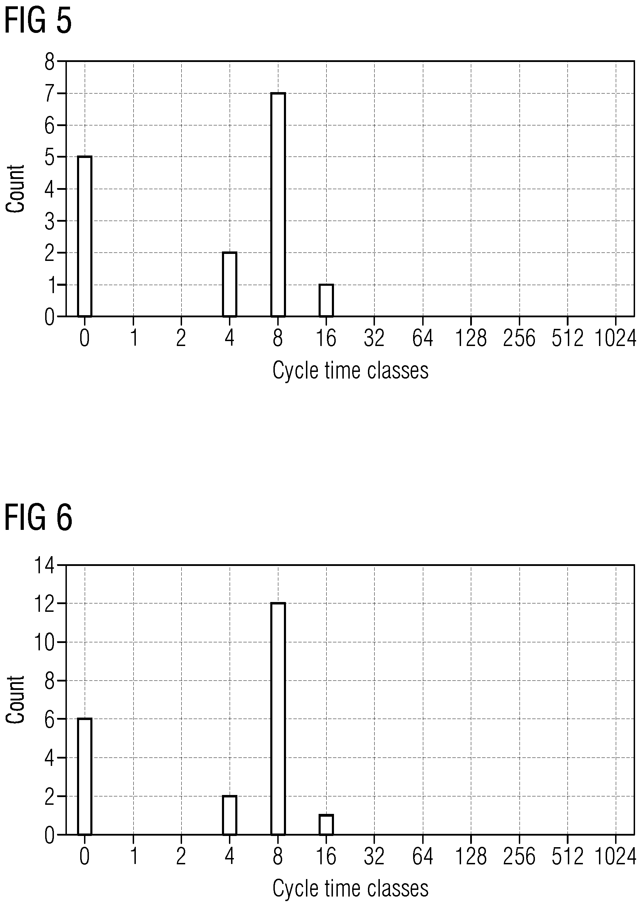

In the following, Fig. 1 is discussed with reference to Fig. 2 - 6. In this regard, Fig. 2 shows a further representation of the system 10 of Fig. 1 illustrating details of the monitoring module 100 for monitoring data streams DS; DS1 - DS3, Fig. 3 shows a first example of an inter-arrival time classification provided by the monitoring module 100, Fig. 4 shows a second example of an inter-arrival time classification provided by the monitoring module 100, Fig. 5 shows a diagram illustrating a first example for inter-arrival time counts per cycle time classes, and Fig. 6 shows a diagram illustrating a second example for inter-arrival time counts per cycle time classes.

The system 10 of Fig. 1 has a plurality of remote controllable entities 201-206 and a plurality of control units 301-303 for remote control of the remote controllable entities 201-206. The remote controllable entities 201-206 and the control units 301-303 are coupled by a communication network 400. Without loss of generality, the system 10 of Fig. 1 has six remote controllable entities 201-206 and three control units 301-303. In embodiments, these numbers are significantly larger.

In the example of Fig. 1, the remote controllable entities 201-206 are part of an OT network 500, in particular an industrial OT network. The remote controllable entities 201-206 may include industrial machines, robots, and industrial equipment, for example. As shown in Fig. 1, the OT network 500 may include different cells 510, 520. Without loss of generality, the OT network 500 of Fig. 1 has two cells 510, 520, wherein each of said cells 510, 520 includes three remote controllable entities 201-206. Further, as shown in Fig. 1, the OT network 500 has a number of switching entities 530, 540, for example embodied as switches or routers, which are configured to couple the remote controllable entities 201-206 with corresponding switching units 410-440 of the communication network 400.

As further shown in Fig. 1, the monitoring module 100 is remotely arranged to said OT network 500. In more detail, in the example of Fig. 1, the monitoring module 100 is part of a hyper-converged infrastructure 600 (HCI; hyper-converged infrastructure). The HCI 600 may include a switching entity 610, like a router or a switch, which is configured to couple to the further switching entities 410-440 of the communication network 400. Moreover, the HCI 600 may include a kernel space 620 and a user space 630. In the example of Fig. 1, the control units 301-303 are implemented in the user space 630. For example, the control units 301-303 are embodied as virtual programmable logic controllers (vPLC). Furthermore, Fig. 1 shows three different data streams DS, i. e. a first data stream DS1 between the remote controllable entity 201 and the allocated control unit 302, a second data stream DS2 between the remote controllable entity 206 and the allocated control unit 301, and a third data stream DS3 between the remote controllable entity 205 and the allocated control unit 303. The number of data streams DS1, DS2, DS3 is exemplary in Fig. 1.

As shown in Fig. 1, parts of the monitoring module 100 may be implemented in the kernel space 620 and in the user space 630. Alternatively, it is possible that the monitoring module 100 is implemented in the kernel space 620 or the user space 630.

As mentioned above, Fig. 2 shows a further representation of the system 10 of Fig. 1, particularly illustrating details of the monitoring module 120. For this reason, details of the HCI 600, the communication network 400 and the OT network 500 are not shown in detail in Fig. 2 (only in Fig. 1), but are abstracted in Fig. 2. In an analogous way, all the data streams in Fig. 2 are abstracted to DS transferred between the group 200 of remote controllable entities 201 - 203 and the group 300 of remote control units 301-303.

Now, in the following, the details of the monitoring module 100 for monitoring data streams DS, in particular real-time data streams, transferred between the remote controllable entities 201 - 203 and the control units 301-303 are discussed with reference to Fig. 2. As shown in Fig. 2, the monitoring module 100 includes a selection unit 110, an allocation unit 120, an operation unit 130, and a signaling unit 140.

The selection unit 110 is particularly configured
- to determine a stream key for received data packets of a certain data stream DS,
- to check if the certain data stream DS is known to the monitoring module 100 by mapping the determined stream key to a memory, in particular to a hash map,
- if the certain data stream DS is known to the monitoring module 100 and the certain data stream DS is marked as not classifiable, to ignore data packets of the certain data stream DS,
- if the certain data stream DS is known to the monitoring module 100 and the certain data stream DS is classified by the second classifying unit 124, to create a new key for the certain data stream DS and to add the created stream key to the memory, and/or
- to count the number of received data packets for every data stream DS a stream key is stored in the memory.

Further, the allocation unit 120 of the monitoring module 100 of Fig. 2 includes a determining unit 121, a first classifying unit 122, a calculating unit 123, and a second classifying unit 124. The allocation unit 120 is configured to allocate a data stream DS transferred between a certain remote controllable entity 201 - 203 and a certain allocated control unit 301-303 to a certain class, also called cycle time class. In particular, the respective cycle time class is defined by the inter-arrival time IAT of two respective consecutive data packets P1, P2 of the data stream DS (see Fig. 3). For example, if the plurality N of defined cycle time classes is 3 (N = 3), there may be a first cycle time class defined by 4 ms, a second cycle time class being defined by 8 ms and a third cycle time class being defined by 16 ms. Thus, the first cycle time class may be referred to as class 4 ms, the second cycle time class may be referred to as class 8 ms, and the third cycle time class may be referred to as class 16 ms.

For executing said allocation, the allocating module 120 comprises said determining unit 121, said first classifying unit 122, said calculating unit 123 and said second classifying unit 124. The determining unit 121 is configured to determine, for a plurality of received data packets P1, P2 of a certain data stream DS, for example the first data stream DS1 as shown in Fig. 1, an inter-arrival time IAT of two respective consecutive data packets P1, P2 of a certain data stream DS (see Fig. 3).

The first classifying unit 122 is configured to classify the respective determined inter-arrival time IAT to one cycle time class of said plurality N of defined cycle time classes and to provide an inter-arrival time count (see Fig. 5 and Fig. 6) for each of the cycle time classes.

For classifying the respective determined inter-arrival time IAT to one of N cycle time classes, the first classifying unit 122 uses a soft boundary mechanism. The soft boundary mechanism uses, for each of the N cycle time classes, defined by boundaries being defined by a certain value range VR for the inter-arrival time IAT being allocated to the respective cycle time class. For example, the respective certain value range VR is defined by a certain value, for example 8 ms, allocated to the respective cycle time class, e. g. class 8 ms, and a certain allowable deviation in percent, for example 5 %. In the 5 % example, the certain value range for the class 8 ms is between 7,6 ms and 8,4 ms.

In this regard, Fig. 3 and 4 show examples of the inter-arrival time classification provided by the first classifying unit 122 of the monitoring module 100. Here, both Fig. 3 and 4 show two consecutive data packets P1 and P2 of a data stream DS. Further, in Fig. 3 and 4, the value range VR for class 8 ms with the boundaries B1 (B1 = 7,6 ms) and B2 (B2 = 8,4 ms) are depicted. In Fig. 3 the first classifying unit 122 increments the inter-arrival time count for cycle time class 8 ms, as the inter-arrival time IAT lies in said value range VR. By contrast, in Fig. 4 the first classifying unit 122 does not increment the inter-arrival time count for the cycle time class 8 ms as the inter-arrival time IAT of the two packets P1 and P2 does not lie in the value range VR for class 8 ms.

Summing up the above, there are two possible cases for the inter-arrival time classification. In the first case, the inter-arrival time IAT of two consecutive packets P1, P2 falls into the soft boundary defined by the value range VR of a cycle time class, e. g. class 8 ms. This case is depicted in Fig. 3. The second case occurs, if the inter-arrival time IAT of two consecutive packets P1, P2 does not fall into the soft boundary defined by the value range VR of the certain class, e. g. class 8 ms. Then, the inter-arrival time IAT is counted as no match for the certain cycle time class. This is shown in Fig. 4. In general words, the first classifying unit 122 is configured to increment the inter-arrival time count of a certain cycle time class if the determined inter-arrival time IAT matches the certain value range VR allocated to the certain cycle time class.

Next, the calculating unit 123 is configured to calculate probabilities for the N cycle time classes based on the provided inter-arrival time counts. In this regard, Fig. 5 shows a first example for the inter-arrival time counts per cycle time classes. As Fig. 5 shows, the counts are 5 for class 0 (not classifiable), 2 for class 4 ms, 7 for class 8 ms and 1 for class 16 ms.

The calculated probabilities for the N cycle time classes are used by the second classifying unit 124. The second classifying unit 124 is configured to classify the certain data stream DS as a data stream of that cycle time class of the N cycle time classes whose calculated probability is higher than a certain target probability. And the second classifying unit 124 is only active if the number of inter-arrival times IAT classified by the first classifying unit 122 is higher than a certain minimum number, for example the certain minimum number is 10. Furthermore, the second classifying unit 124 may be configured to mark the certain data stream DS as not classifiable if the total number of classified inter-arrival times IAT is higher than a defined limit and none of the determined probabilities is higher than the certain target probability. Then, the alerting unit 125 may generate an alert if the certain data stream DS is marked as not classifiable in the end. Said alert may be transferred to the signaling unit 140 which may signal said alert to the operator.

Coming back to the example of the Fig. 5, if the threshold of classified packets, e. g. the certain minimum number of 10, is reached, the second classifying unit 124 tries to find a class with high confidence. With reference to Fig. 5, the measured probabilities for the classes are: 0% for classes 1, 2, 32, 64, 128, 256, 512 and 1024, 20% for class 4, 70% for class 8 and 10% for class 16.

If the certain target probability is 80%, one can derive from Fig. 5 that no class is reaching the target probability or confidence of 80%. Thus, the classification continues.

After more data packets arrived at the monitoring module 100 and more inter-arrival times IAT are classified, Fig. 6 depicts the observed counts. The new counts are 5 for the no match class 0, 2 for the class 4 ms, 12 for the class 8 ms and 1 or the class 16 ms. Thus, according to Fig. 6, the measured probabilities of the classes are: 0% for classes 1, 2, 32, 64, 128, 256, 512 and 1024, 13,3% for class 4, 80% for class 8 and 6,7% for class 16. Therefore, the second classifying unit 124 finds a class with a confidence being larger than or equal 80% and classifies the data stream DS as of class 8 ms and sets predefined boundaries of class 8 ms as learned boundaries of said data stream. Thus, the second classifying unit 124 is configured to set the defined boundaries of a classified data stream DS as learned boundaries for the classified data stream for an operation phase. The operation phase is executed by the operation unit 130 and is discussed in detail below. In particular, the second classifying unit 124 may not check the remaining classes as it already found a class with high confidence, e. g. when the classes are ordered by increasing inter-arrival times, the classes 16 to 1024 are not checked anymore. This emphasizes, why the target probability is preferably larger than 50% as to guarantee that no class with a larger probability can exist and may be ignored wrongly.

As mentioned above, the operation phase is executed by operation unit 130. During said operation phase, the operation unit 130 is configured to execute checking if learned boundaries are available for received data packets of a certain data stream DS, checking if arriving data packets of the certain data stream lie in the learned boundaries of the certain data stream DS, and/or creating an alert if an error is detected, said alert specifying which data stream DS is incorrect and the number of errors counted for the incorrect data stream DS.

Therefore, the operation phase has different events. A first event is, if the measured inter-arrival time IAT of two consecutive packets lies in the learned boundaries. Then, the data packet is marked as correct. A second event is, if the measured inter-arrival time IAT of two consecutive data packets is not in the learned boundaries. Then, the data packet is counted as an error and an alert may be created.

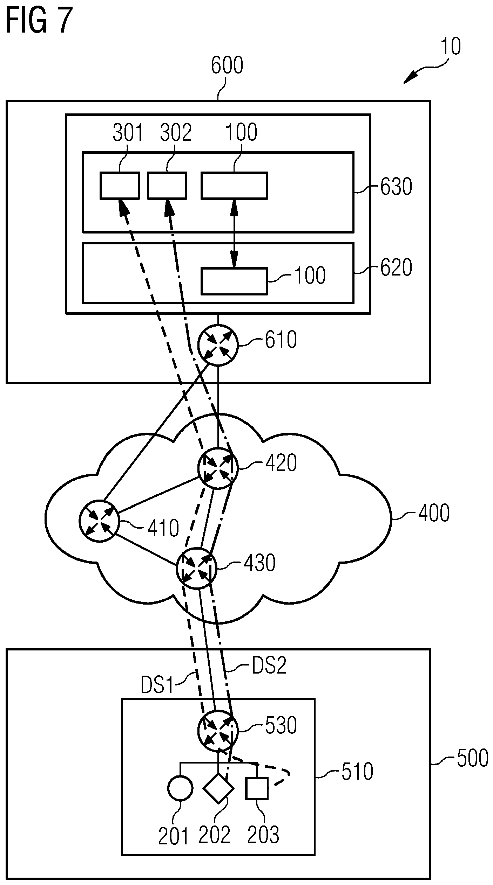

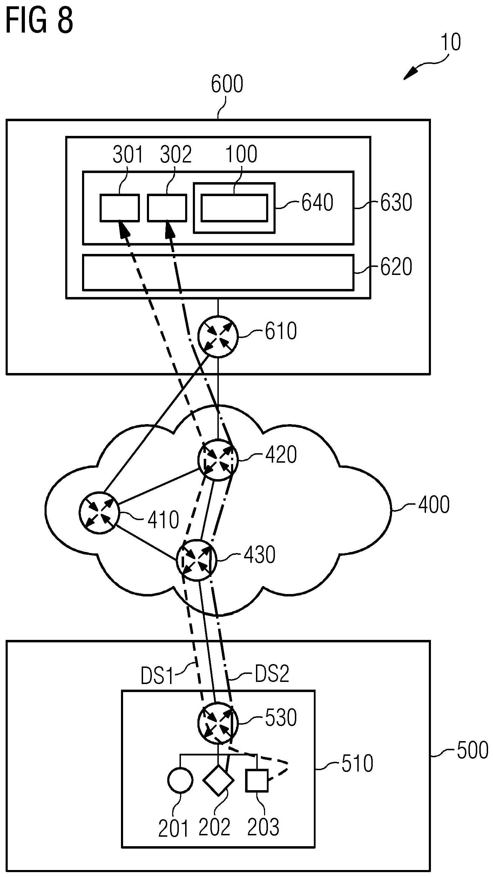

Furthermore, Fig. 7 and Fig. 8 show schematic block diagrams of a second and a third embodiment of the system 10, both being based on the system 10 as discussed with reference to Fig. 1 - 6. In detail, Figs. 7 and 8 show two modes of operation. Here, Fig. 7 shows the so-called native mode on a shared server. In this mode of operation, the monitoring module 100 runs on the same server as the control units 301, 302 but in native mode.

By contrast, Fig. 8 shows a container mode on the shared server. In this mode of operation of Fig. 8, the monitoring module 100 runs on the same server as the control units 301, 302, but in a container 640.

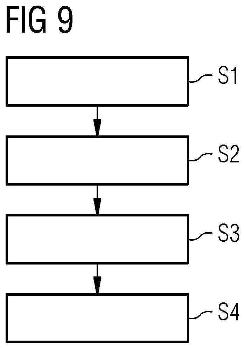

Moreover, Fig. 9 shows a schematic flow chart of an embodiment of a computer implemented method for monitoring data streams DS, in particular real-time data streams, transferred between a plurality of remote controllable entities 201-206 and a plurality of control units 301-303 for remote control of the remote controllable entities 201-206. The remote control entities 201-206 and the control units 301-303 may be coupled by a communication network 400. The method of Fig. 9 includes steps S1 - S4, said steps S1 - S4 may be executed by a monitoring module 100 as discussed with reference to the above discussed Figs. 1 - 8.

In step S1, for a plurality of received data packets of a certain data stream DS, an inter-arrival time IAT of two respective consecutive data packets of the certain data stream DS is determined.

In step S2, the respective determined inter-arrival time IAT is classified to one cycle time class of a plurality N of defined cycle time classes, wherein an inter-arrival time IAT count for each of the cycle time classes is provided.

In step S3, probabilities for the N cycle time classes are calculated based on the provided inter-arrival time counts.

In step S4, the certain data stream DS is classified as a data stream of that cycle time class of the N cycle time classes whose calculated probabilities is higher than a certain target probability.

Although the present invention has been described in accordance with preferred embodiments, it is obvious for the person skilled in the art that modifications are possible in all embodiments.

## Claims

1. A monitoring module (100) for monitoring data streams (DS, DS1, DS2, DS3), in particular real-time data streams, transferred between a plurality of remote controllable entities (201-206) and a plurality of control units (301-303) for remote control of the remote controllable entities (201-206), the remote controllable entities (201-206) being coupled with the control units (301-303) by a communication network (400), the monitoring module (100) comprising:
a determining unit (121) for determining, for a plurality of received data packets of a certain data stream (DS, DS1, DS2, DS3), an inter-arrival time (IAT) of two respective consecutive data packets (P1, P2) of the certain data stream (DS, DS1, DS2, DS3),
a first classifying (122) unit for classifying the respective determined inter-arrival time (IAT) to one cycle time class of a plurality N of defined cycle time classes and for providing an inter-arrival time count for each of the cycle time classes,
a calculating unit (123) for calculating probabilities for the N cycle time classes based on the provided inter-arrival time counts, and
a second classifying unit (124) for classifying the certain data stream (DS, DS1, DS2, DS3) as a data stream of that cycle time class of the N cycle time classes whose probability is higher than a certain target probability.

2. The monitoring module of claim 1,
wherein the first classifying unit (122) is configured to classify the respective determined inter-arrival time (IAT) to one of the N cycle time classes using a soft boundary mechanism.

3. The monitoring module of claim 2,
wherein the soft boundary mechanism uses, for each of the N cycle time classes, defined boundaries being defined by a certain value range (VR) for the inter-arrival time (IAT) being allocated to the respective cycle time class.

4. The monitoring module of claim 3,
wherein the respective certain value range (VR) is defined by a certain value allocated to the respective cycle time class and a certain allowed deviation in percent.

5. The monitoring module of claim 3 or 4,
wherein the second classifying unit (124) is configured to set the defined boundaries of a classified data stream (DS, DS1, DS2, DS3) as learned boundaries for the classified data stream for an operation phase.

6. The monitoring module of any of claims 1 to 5,
wherein the first classifying unit (122) is configured to increment the inter-arrival time count of a certain cycle time class if the determined inter-arrival time (IAT) matches the certain value range (VR) allocated to said certain cycle time class.

7. The monitoring module of any of claims 1 to 6,
wherein the second classifying unit (124) is only active if the number of inter-arrival times (IAT) classified by the first classifying unit (122) is higher than a certain minimum number.

8. The monitoring module of any of claims 1 to 7,
wherein the calculating unit (123) is configured to calculate, for the respective cycle time class, a respective probability by dividing the number of inter-arrival time counts of the respective cycle time class by the total number of classified inter-arrival times (IAT) of all N cycle time classes.

9. The monitoring module of any of claims 1 to 8,
further comprising an alerting unit (125) which is configured to generate a certain alert based on the classified certain data stream (DS, DS1, DS2, DS3).

10. The monitoring module of any of claims 1 to 9,
wherein the second classifying unit (124) is configured to mark the certain data stream (DS, DS1, DS2, DS3) as not classifiable if the total number of classified inter-arrival times (IAT) is higher than a defined limit and none of the determined probabilities is higher than the certain target probability, and wherein the alerting unit (125) is configured to generate an alert if the certain data stream (DS, DS1, DS2, DS3) is marked as not classifiable.

11. The monitoring module of any of claims 1 to 10,
further comprising a selection unit (110) which is configured
- to determine a stream key of a received data packet (P1, P2) of a certain data stream (DS, DS1, DS2, DS3),
- to check if the certain data stream (DS, DS1, DS2, DS3) is known to the monitoring module (100) by mapping the determined stream key to a memory, in particular to a hash map,
- if the certain data stream (DS, DS1, DS2, DS3) is known to the monitoring module (100) and the certain data stream (DS, DS1, DS2, DS3) is marked as not classifiable, to ignore data packets of the certain data stream (DS, DS1, DS2, DS3),
- if the certain data stream (DS, DS1, DS2, DS3) is known to the monitoring module (100) and the certain data stream is classified by the second classifying unit (124), to create a new stream key for the certain data stream (DS, DS1, DS2, DS3) and to add the created stream key to the memory, and/or
- to count the number of received data packets for every data stream (DS, DS1, DS2, DS3) a stream key is stored in the memory.

12. The monitoring module of any of claims 1 to 11, comprising an allocation module (120), wherein the allocation module (120) integrates the determining unit (121), the first classifying unit (122), the calculating unit (123), the second classifying unit (124) and the alerting unit (125).

13. The monitoring module of any of claims 5 to 12, further comprising an operation unit (130) which is configured to execute during the operation phase:
- checking if learned boundaries are available for received data packets of a certain data stream (DS, DS1, DS2, DS3),
- checking if arriving data packets of the certain data stream (DS, DS1, DS2, DS3) lie in the learned boundaries of the certain data stream (DS, DS1, DS2, DS3), and/or
- creating an alert if an error is detected, said alert specifying which data stream (DS, DS1, DS2, DS3) is incorrect and the number of errors counted for the incorrect data stream (DS, DS1, DS2, DS3).

14. A system (10), comprising
an OT network (500) including a plurality of remote controllable entities (201-206),
a plurality of control units (301-303) for remote control of the remote controllable entities (201-206), in particular programmable logic controllers, for example virtual programmable logical controllers,
a communication network (400) for coupling the remote controllable entities (201-206) with the control units (301-303), and
a monitoring module (100) for monitoring data streams (DS, DS1, DS2, DS3) of any of claims 1 to 13.

15. The system of claim 14,
wherein the monitoring module (100) is embodied as an in-network module being integrated in a hyper-converged infrastructure (600) being coupled or being part of the communication network (400).

16. A computer-implemented method for monitoring data streams (DS, DS1, DS2, DS3), in particular real-time data streams, transferred between a plurality of remote controllable entities (201-206) and a plurality of control units (301-303) for remote control of the remote controllable entities (201-206), the remote controllable entities (201-206) being coupled with the control units (301-303) by a communication network (400), the method comprising:
determining (S1), for a plurality of received data packets of a certain data stream (DS, DS1, DS2, DS3), an inter-arrival time (IAT) of two respective consecutive data packets (P1, P2) of the certain data stream (DS, DS1, DS2, DS3),
classifying (S2) the respective determined inter-arrival time (IAT) to one cycle time class of a plurality N of defined cycle time classes and providing an inter-arrival time count for each of the cycle time classes,
calculating (S3) probabilities for the N cycle time classes based on the provided inter-arrival time counts, and
classifying (S4) the certain data stream (DS, DS1, DS2, DS3) as a data stream of that cycle time class of the N cycle time classes whose calculated probability is higher than a certain target probability.

17. A computer program product comprising a program code for executing the computer-implemented method according to claim 16 when run on at least one computer.
